# EUROPEAN PATENT APPLICATION

(11) **EP 2 860 610 A2**
(43) Date of publication of application: **15.04.2015**
(21) Application number: 14188480.9
(22) Date of filing: 10.10.2014
(51) Int. Cl.: G06F 3/01

(54) **Devices and methods for generating tactile feedback**

(30) Priority: 10.10.2013 US 201314051277
(71) Applicant: BlackBerry Limited, Waterloo, ON N2K 0A7 (CA)
(72) Inventor: Berglund, Carl Fredrik Alexander, 21140 Malmö (SE); Gärdenfors, Dan Zacharias, 21140 Malmö (SE); Lewin, Hans Mathias, 21140 Malmö (SE)
(74) Representative: Carpmaels & Ransford LLP

(57) **Abstract**

A method for use in an electronic device is described. The electronic device is configured to function in a first operating state and a second operating state. The method comprises generating, when in the first operating state, a first tactile feedback in response to user input associated only with the first operating state.

## Description

### Technical Field

The present disclosure relates to devices and methods for generating tactile feedback.

### Background

Electronic devices may be used for connected interactions in combination with other electronic devices. For example, a mobile device may be used as a remote control device for an external screen. In another example, a handheld device, e.g., a mobile terminal, may be configured to control a personal computer in the form of a track pad. However, there is a risk that a user may become confused and cannot differentiate between local interactions with a mobile device and connected interactions where gestures performed on one device influence other devices or screens.

### Brief Description of the Drawings

The present disclosure can be understood with reference to the description of the embodiments set out below, in conjunction with the appended drawings in which:
Fig. 1A is a schematic diagram of an electronic device used in some embodiments;
Fig. 1B is a schematic diagram illustrating components of the electronic device illustrated in Fig. 1A;
Fig. 2A is a schematic diagram of an electronic device coupled to a further electronic device used in some embodiments;
Fig. 2B is a schematic diagram illustrating components of the further electronic device illustrated in Fig. 2A;
Fig. 2C is a schematic diagram of the electronic device coupled to the further electronic device illustrated in Fig. 2B illustrating a further or alternative operation;
Figs. 3A and 3B is a schematic diagram of an electronic device operating in a first operating state and second operating state used in some embodiments;
Fig. 4 is a schematic diagram of an electronic device coupled to a further electronic device used in some embodiments;
Fig. 5 is a schematic diagram of an electronic device coupled to two further electronic devices used in some embodiments;
Fig. 6 is a flow chart depicting a method performed by a processor of an electronic device described in association with Figs. 1A to 5;
Fig. 7 is a flow chart depicting a method performed by a processor of an electronic device described in association with Figs. 1A to 2C; and
Fig. 8 is a flow chart depicting a method performed by a processor of an electronic device described in association with Figs. 3A and 3B.

### Description

This disclosure below is a description of one or more exemplary embodiments which are not intended to be limiting on the scope of the appended claims.

In a first aspect there is provided a method for use in an electronic device, the electronic device being configured to function in a first operating state and a second operating state, the method comprising: generating, when in the first operating state, a first tactile feedback in response to user input associated only with the first operating state.

User input associated with the first operating state may comprise user input to control only a first functional partition of the electronic device and wherein user input associated with the second operating state may comprise user input to control only a second functional partition of the electronic device.

The functional partitions may be configured to allow access to at least one predetermined component of the electronic device.

The at least one predetermined component of the electronic device may comprise one or more of an executable component, an application, a block of memory, user-received items, received data, and user entered data.

When in the first operating state, only the electronic device may be configured to be controlled by user input provided via the electronic device; and when in the second operating state, the electronic device may be configured to be coupled to a further electronic device and to provide user input received via the electronic device to the further electronic device for controlling an operation associated with the further electronic device.

The first tactile feedback may be generated in response to controlling an operation associated only with the electronic device.

When in the first operating state, the electronic device may be configured to be coupled to a further electronic device and to provide user input received via the electronic device to the further electronic device for controlling an operation associated with the further electronic device; and when in the second operating state, only the electronic device may be configured to be controlled by user input provided via the electronic device.

The first tactile feedback may be generated in response to providing user input to the further electronic device for controlling an operation which is associated with the further electronic device.

Wherein the first tactile feedback may be generated in response to receiving data from the further electronic device based on an operation which is associated with the further electronic device.

When in the second operating state, the electronic device may be configured to output display data to the further electronic device pertaining to one of a plurality of executable applications executable on the electronic device for display on the further electronic device and wherein the operation associated with the further electronic device may comprise interaction with a display object generated at least in part on the received displayed data.

The operation which is associated with the further electronic device may comprise interaction with a given one of a plurality of executable applications on the further electronic device.

The data received from the further electronic device may pertain to an event occurring in association with the given application.

The event may comprise one or more of receipt of a user-readable message received by the given application or a user notification generated by the given application.

When in the second operating state, the method may comprise: receiving user input at the electronic device for controlling the operation which is associated with the further electronic device; and outputting control data from the electronic device for controlling the operation which is associated with the further electronic device.

When in the first operating state, the method may comprise: receiving user input at the electronic device for controlling the operation which is associated with the further electronic device; and outputting control data from the electronic device for controlling the operation which is associated with the further electronic device.

The operation which is associated with the further electronic device may comprise controlling hardware of the further electronic device.

The first tactile feedback may comprise one or more of: vibration of the electronic device or haptics on a screen of the electronic device.

The user input at the electronic device may be received from one or more of: a button on the electronic device, a touch sensitive interface on the electronic device, a motion detector within the electronic device, such as a gyroscope and/or an accelerometer, an electromagnetic radiation receiving device, such as a camera and an audio receiving device, such a microphone.

The method may comprise: generating, when in the second operating state, a second tactile feedback in response to user input associated with the second operating state, wherein the first tactile feedback and the second tactile feedback are different to one another.

The second tactile feedback may comprise one or more of: vibration of the electronic device or haptics on a screen of the electronic device.

In a second aspect there is provided an electronic device, comprising processing circuitry configured to: operate in a first operating state and operate in a second operating state, wherein the processing circuitry is configured to switch between the first and second operating states; the processing circuitry being further configured to: generate, when operating in the first operating state, a first tactile feedback in response to the operation which is associated only with the first operating state.

In a third aspect there is provided a computer-readable medium comprising executable instructions which, when executed, cause a processor to perform a method at an electronic device, the electronic device being configured to function in a first operating state and a second operating state, the method comprising: generating, when in the first operating state, a first tactile feedback in response to user input associated only with the first operating state.

In a fourth aspect, there is provided a computer-readable medium comprising executable instructions which, when executed, cause a processor to perform one or more of the above methods. The executable instructions may be computer-executable instructions. A device may be configured to receive the executable instructions from the computer-readable medium, and/or comprise the executable instructions, and be configured to execute the executable instructions.

In a fifth aspect, there is provided a device configured to perform one or more of the above methods. The device may further comprise a processor configured to perform one or more of the above methods. The processor may comprise one or more discrete electronic components.

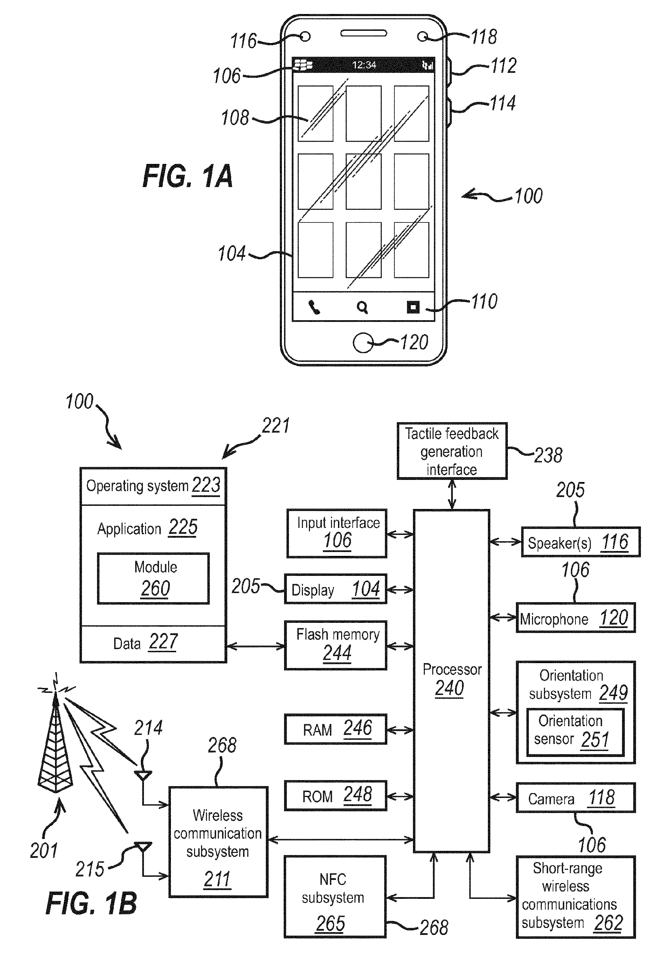

Referring now to Fig. 1A, a front view of an electronic device or first electronic device 100, which in one example may be a mobile device 100, is illustrated. The electronic device 100 (e.g. smart phone) is in this example offers more advanced computing capability than a basic non-smartphone cellular phone. For example, the electronic device 100 may have the ability to run third party applications which are stored on the mobile device 100.

The electronic device 100 includes the components discussed with reference to Fig. 1A below.

The electronic device 100 includes a display 104, which may be a touchscreen which also acts as an input interface 106. The touch screen input interface 106 may be providing uses known touch screen technologies including capacitive, optical and resistive touch screens. The display 104 is disposed within the electronic device 100 so that it is viewable at a front side of the mobile device 100. That is, a viewable side of the display 104 is disposed on the front side of the electronic device 100.

The electronic device 100 also includes other input interfaces such as one or more buttons, keys or navigational input mechanisms 112, 114. In the electronic device 100 illustrated, at least some of these additional input interfaces are disposed for actuation at a side of the electronic device 100, but it will be appreciated that such buttons, keys or navigational input mechanisms may be provided on any face or side of the electronic device 100, e.g., the back surface or side (i.e., the opposing surface to the front side).

The display 104 of the electronic device 100 is capable of generating tactile sensations, for example, using TeslaTouch (TeslaTouch: Electrovibration For Touch Surfaces by Olivier Bau, Ivan Poupyrev, Ali Israr, and Chris Harrison, 2010). The tactile sensations allow a user to feel virtual elements on the touch screen or panel 106. For example, the user can feel properties of interface elements in graphical user interfaces, such a characters and textures. The tactile sensation is provided via electrodes which maybe overlaid on the display 104, as part of a capacitive or resistive touch panel, forming the input interface 106 in this example, or as a separate set of electrodes. Electrical signals of predetermined voltage and frequency are applied to the electrodes to provide electrovibration to the touch surface or input interface 106.

The electronic device 100 is also provided with a speaker 116 for omitting sound generated by the electronic device 100. In the electronic device 100 illustrated, the speaker 116 is disposed vertically above the display 104 when the electronic device 100 is held in a portrait orientation where its height is longer than its width. The speaker 116 may be disposed on the front face of the electronic device 100.

The electronic device 100 also includes a microphone 120. In the electronic device 100 illustrated, the microphone 120 is vertically disposed below the display 104 when the electronic device is held in the portrait orientation. The microphone 120 and at least one speaker 116 may be arranged, in use, so that the microphone 120 is in close proximity to a user's mouth and the speaker 116 is in close proximity to a user's ear when the user holds the electronic device to their face to converse on the electronic device 100.

The electronic device 100 also includes a front facing camera 118 which may be located vertically above the display 104 when the electronic device 100 is held in a portrait orientation where its height is longer than its width. The front facing camera 118 is located so that it may capture images of objects which are located in front of or surrounding the front side of the electronic device 100.

The electronic device 100 is illustrated with one or more selectable display icons 108, which when selected by a user cause an executable application or program to be launched or opened on the electronic device 100. The electronic device 100 also includes a home or static menu bar 110 which in the example includes three selectable icons (e.g., call, search, camera) that remain static, unlike the other icons 108 which may be moved, deleted, added, etc.

Fig. 1B is a schematic representation of the electronic device 100. The electronic device 100 of Fig. 1 is configured to generate a user-controllable interface on a built-in display and/or on a remote, external display device, or on a built-in display and on a remote, external display device. It will be appreciated that, in certain embodiments, some of the features, systems or subsystems of the electronic device 100 discussed below with reference to Fig. 1B may be omitted from the electronic device 100 which are intended to perform operations in relation to the generating tactile feedback.

The electronic device 100 is a communication device, in this example, more particularly, may be a mobile or handheld device, such as a mobile or handheld communication device, for example having data and voice communication capabilities. It may also have the capability to communicate with other computer systems; for example, via a data link or network, such as a short-range radio frequency link, e.g. Bluetooth, or via a data network, which may be wireless (e.g., WiFi using IEEE 802.11 radio standards) and may be connected to the Internet. It will be appreciated that the electronic device 100 may take other forms, including any one of the forms listed below. Depending on the functionality provided by the electronic device 100, the electronic device 100 is a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. The electronic device 100 may take other forms apart from those specifically listed above. The electronic device 100 may also be referred to as a mobile, handheld or portable communications device, a communication device, a mobile device and, in some cases, as a device. In the context of this disclosure, the term "mobile" means the device is of a size or weight which makes it readily portable by a single individual, e.g. of a weight less than 5, 4, 3, 2, 1, 0.5, 0.4, 0.3, 0.2 or 0.1 kilograms, or of a volume less than 15,000, 10,000, 5,000, 4,000, 3,000, 2,000, 1,000, 500, 400, 300, 200, 100, 90, 80, 70, 60, 50, 40, 30, 20, 10 or 5 cubic centimetres. As such, the device 100 may be portable in a bag, or clothing pocket.

The electronic device 100 includes a controller including a processor 240 (such as a microprocessor) which controls the operation of the electronic device 100. In certain electronic devices, more than one processor is provided, with each processor in communication with each other and configured to perform operations in parallel, so that they together control the overall operation of the electronic device 100. The processor 240 interacts with device subsystems 268, such as a wireless communication subsystem 211 for exchanging radio frequency signals with a wireless network 201 to perform communication functions. The processor 240 is communicably coupled with additional device subsystems including one or more output interfaces 205 (such as one or more of: a display 104, a speaker 116, haptic generation interface 238), one or more input interfaces 106 (such as one or more of: a camera 118, microphone 120, keyboard (not shown), control buttons 112, 114, a navigational input device (not shown), a touch-sensitive overlay (not shown)) associated with a touchscreen or display 104, an orientation subsystem 249, memory (such as flash memory 244, random access memory (RAM) 246, read only memory (ROM) 248, etc.), a near field communications (NFC) subsystem 265, and a short-range communication subsystem 262. Some of the subsystems shown in Fig. 1B perform communication-related functions, whereas other subsystems may provide "resident" or on-device functions.

The electronic device 100 stores data 227 in an erasable persistent memory, which in one embodiment is the flash memory 244. In various embodiments, the data 227 includes service data including information used by the electronic device 100 to establish and maintain communication with the wireless network 201. The data 227 may also include user application data such as email messages, address book and contact information, calendar and schedule information, notepad documents, presentation documents and information, word processor documents and information, spread sheet documents and information; desktop publishing documents and information, database files and information; image files, video files, audio files, internet web pages, and other commonly stored user information stored on the electronic device 100 by its user, and other data. The data may also include program application data such as functions, controls and interfaces from an application such as an email application, an address book application, a calendar application, a notepad application, a presentation application, a word processor application, a spread sheet application, a desktop publishing application, a database application, a media application such as a picture viewer, a video player or an audio player, and a web browser. The data 227 stored in the persistent memory (e.g. flash memory 244) of the electronic device 100 may be organized, at least partially, into one or more databases or data stores. The databases or data stores may contain data items of the same data type or associated with the same application. For example, email messages, contact records, and task items may be stored in individual databases within the device memory.

The display 104 receives display data generated by the processor 240, such that the display 204 displays certain application data stored as a segment of the data 227 from the memory (any of the flash memory 244, random access memory (RAM) 246, read only memory (ROM) 248) in a predetermined way on display screen (not shown) of the display 104, according to the processing performed by the processor 240.

In at least some embodiments, the electronic device 100 includes a touchscreen which acts as both an input interface 106 (e.g. touch-sensitive overlay) and an output interface 205 (i.e. display 104). The touchscreen may be constructed using a touch-sensitive input surface which is connected to an electronic controller and which overlays the display 104. The touch-sensitive overlay (e.g., capacitive or resistive) and the electronic controller provide a touch-sensitive input interface 106 and the processor 240 interacts with the touch-sensitive overlay via the electronic controller. The touch screen may also be provided using known optical techniques.

The processor 240 is in communication with the memory and the touch-sensitive input interface 106 to detect user input via the input interface 106. The processor 240 then generates or updates display data comprising a display object for display by the display device 104 in accordance with the user input. The processor 240 then outputs the display data for display on the display device 104. In an embodiment, the user input may comprise a swipe gesture across the touchscreen interface 106.

In at least some embodiments, the touch-sensitive overlay has a touch-sensitive input surface which is larger than the display 104. For example, in at least some embodiments, the touch-sensitive overlay may extend overtop of a frame (not shown) which surrounds the display 104. In such embodiments, the frame (not shown) may be referred to as an active frame since it is capable of acting as an input interface 106. In at least some embodiments, the touch-sensitive overlay may extend to the sides of the electronic device 100.

The input interface 106 may also comprise the touchscreen, in which case the electronic device 100 may be referred to as a 'multi-touch device'. The input detected by the touchscreen interface may comprise any suitable user touch-based input. For example, the input may comprise a gesture input such as a tap, a multi-tap, a long press, a swipe or scroll or slide, a pan, a flick, a multi-swipe, a multi-finger tap, a multi-finger scroll or swipe, a pinch, a two-hand pinch, a spread, a two-hand spread, a rotation, a two-hand rotation, a slide and rotation, a multi-direction slide, a multi-finger slide and rotation, a multi-finger slide, etc. It will be appreciated that the gesture input may comprise a sequence of input elements or stages performed within a specified or predetermined time frame, for example, a three-tap gesture in which each tap comprises an element (or a sub-input, a phase or a stage) of the input and the three taps are performed within a time frame that enables the processor 240 to detect the taps as elements of a single input. Additionally or alternatively, an input may comprise removing a point of contact, e.g., a finger or stylus, from the touchscreen interface.

Many examples described herein refer to a gesture detected by a touch-sensitive display, but other methods of gesture detection may be used. For example, a gesture may be a generalized trajectory description characterized as a sequence of 3D points in time, and as such many different sensors may be utilized to detect such a gesture. The gesture may be performed by moving a portable electronic device or moving one or more body parts, such as fingers or thumbs as a 3D spatial gesture. For example, sensors, such as an accelerometer/gyroscope, or proximity sensors, or time-of-flight cameras may detect such gestures. Gesture recognition and detection techniques of this type are known.

A gesture input is different to input of a command by manipulation of a control component presented on the screen because a gesture input can be performed at any location within the display screen (or a large area of the display screen) in contrast to a single contact point for a user finger or input stylus on a corresponding control element. In order to input a command using a control component, the user must contact the screen at a specific location corresponding to that component. For example, in order to change an output volume using a volume control, the user must select the volume control by touching the location at which the volume control is displayed and moving the displayed control element by a desired amount through movement of the user's finger across the screen. Such user input must therefore be precisely controlled in order to use control elements to input commands. Gesture-based inputs, on the other hand, do not require the same precise control as they are not tied to a specific location on the screen. Instead, a user wishing to, e.g., scroll through a list of media content can do so by performing a swipe gesture at any location within a media-player display.

As noted above, in some embodiments, the electronic device 100 includes a communication subsystem 211 which allows the electronic device 100 to communicate over a wireless network 201 via one or more antenna elements 214, 215, which may be embedded or internal to the electronic device 100 and a single antenna may be shared by both a receiver and a transmitter. The particular design of the wireless communication subsystem 211 depends on the wireless network 201 in which electronic device 100 is intended to operate.

In at least some embodiments, the electronic device 100 also includes a device orientation subsystem 249 including at least one orientation sensor 251 which is connected to the processor 240 and which is controlled by one or a combination of a monitoring circuit and operating software. The orientation sensor 251 detects the orientation of the device 100 or information from which the orientation of the device 100 can be determined, such as acceleration. In some embodiments, the orientation sensor 251 is an accelerometer, such as a three-axis accelerometer. An accelerometer is a sensor which converts acceleration from motion (e.g. movement of the device 100 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer.

An orientation sensor 251 may generate orientation data which specifies the orientation of the electronic device 100. The orientation data, in at least some embodiments, specifies the orientation of the device 100 relative to the gravitational field of the earth. Additionally or alternatively, the orientation sensor 251 may generate orientation data which specifies the orientation of the device relative to known locations or fixtures in a communication network.

In some embodiments, the orientation subsystem 249 includes other orientation sensors 251, instead of or in addition to accelerometers. For example, in various embodiments, the orientation subsystem 249 may include a gravity sensor, a gyroscope, a tilt sensor, an electronic compass or other suitable sensor, or combinations thereof. In some embodiments, the device orientation subsystem 249 may include two or more orientation sensors 251 such as an accelerometer and an electronic compass. The orientation subsystem 249 may be used to detect a sequence of acceleration values in different spatial dimensions as a function of time and constitute trajectory information that can be recognized as a gesture. For example, a quick flick and a tilt of the portable electronic device are examples of detectable gestures. A 3D spatial gesture includes a continuous movement, a sequence of movements, and a series of continuous movements or sequences of movements. Proximity sensors, optical sensors, and/or cameras may be utilized to detect 3D spatial gestures comprising motion of objects spaced from the device.

The electronic device 100 is provided with a tactile generation interface 238. The tactile feedback generation interface 238 may comprise one or more of a haptic generation element and a vibration element. The vibration element may be used to vibrate the electronic device 100 so a user is able to detect the vibration, typically when holding the electronic device 100, as is known in the art. The vibration element may be used to generate different types of vibration which vary in duration, intensity, and may be pulsed or constant. The haptic generation unit or element is an integral part of the display 104, as described above. The haptic generation unit 238 is used to provide electrovibration to the touch surface or input interface 106 of the electronic device 100 that is detectable by a user touching the input interface 106. As discussed above, the haptic generation unit comprises electrodes that may form part of the display 104, the touch panel, or may be a number of electrodes that overlay one or other of the display 104 or touch panel. The tactile feedback generation interface 238 is coupled to the processor 240 to receive control signals. It will appreciated that the tactile feedback generation interface 238 may include its own processor (not shown) to generate signals to provide a predetermined tactile feedback in response to control signals received from the processor 240.

The electronic device 100, in at least some embodiments, includes a Near-Field Communication (NFC) subsystem 265. The NFC subsystem 265 is configured to communicate with other electronic devices or tags, using an NFC communications protocol. NFC is a set of short-range wireless technologies which typically require a distance of 4 cm or less for communications. The NFC subsystem 265 may include an NFC chip and an NFC antenna. In such an embodiment, the orientation sensor 251 may generate data which specifies a distance between the electronic device 100 and an NFC transceiver.

The electronic device 100 includes a short-range communication subsystem 262 which provides for wireless communication between the electronic device 100 and other further (i.e., remote or second) electronic devices. In at least some embodiments, the short-range communication subsystem 262 is a wireless bus protocol compliant communication mechanism such as a Bluetooth® communication module to provide for communication with similarly-enabled systems and devices or IEEE 802.11 radio standards, which is more typically known as WiFi.

Any one or more of the communication subsystem 211, the NFC subsystem 265 and the short-range wireless communications subsystem 262 serves as a "communication subsystem" which is configured to provide an indicator of an incoming message being received by the electronic device 100. The incoming message may be an email, a message received via a social networking website, an SMS (short message service) message, or a telephone call, for example.

The electronic device 100 is, in some embodiments, a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 104. A user of the electronic device 100 can compose data items, such as email messages; for example, using the input devices in conjunction with the display 104. These composed items may be transmitted through the communication subsystem 211 over the wireless network 201.

In the voice communication mode, the electronic device 100 provides telephony functions and operates as a typical cellular phone. The overall operation is similar, except that the received signals would be output to the speaker 116 and signals for transmission would be generated by a transducer such as the microphone 120. The telephony functions are provided by a combination of software/firmware (i.e., a voice communication module) and hardware (i.e., the microphone 120, the speaker 116 and input interfaces 106). Alternative voice or audio I/O subsystems, such as a voice message recording subsystem, may also be implemented on the electronic device 100. Although voice or audio signal output is typically accomplished primarily through the speaker 116, the display screen 104 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Fig. 1B, the software modules 221 include operating system software 223 and other software applications 225 such as a media player module 260. In the embodiment of Fig. 1B, the media player module 260 is implemented as a stand-alone application 225. However, in other embodiments, a presentation module 260 could be implemented as part of the operating system 223 or other applications 225.

The electronic device 100 illustrated in Figs. 1A and 1B is shown in its typical operating state which in this example is in isolation from other remote devices. That is to say that in a first operating state the electronic device 100 is receiving user input via the input interface 106, for example, which may be used to select one or more of the selectable display icons 108 displayed on the display 104 to launch or open one or more of the applications or programs 108 available on the electronic device 100, as discuss above. This may be referred to as a local interaction. In this first operating state the electronic device 100 is not currently coupled or is not communicating with other, remote or further, electronic devices. It will be appreciated that in this example, the electronic device 100 is a mobile terminal and as such may be in communication with a network provider. Furthermore, in this example, the electronic device 100 does not provide any tactile feedback to the user when the electronic device 100 is operating in this first operating state. Operation or user input may also be provided to the electronic device 100 using other input interfaces 106, such as push buttons 112, 114,

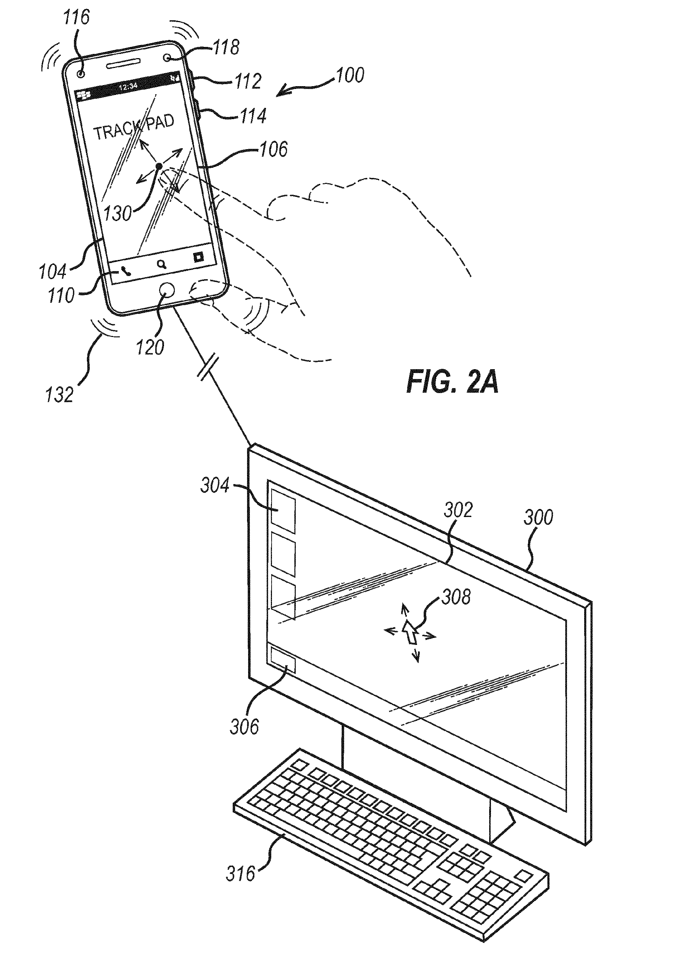

Referring now to Fig. 2A, the electronic device 100 (i.e., the first or local electronic device) 100 is configured to operate in a second operating state when it is coupled to or is communication with a second electronic device (i.e., remote or further electronic device) 300.

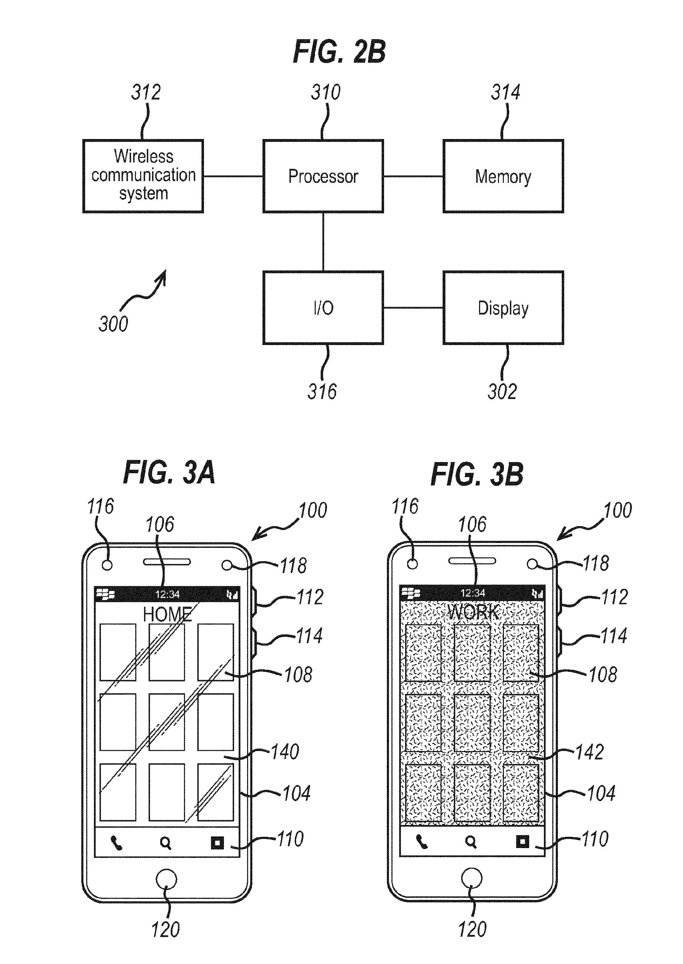

The second electronic device 300 is illustrated schematically in Fig. 2B. The second electronic device 300 in this example is a general purpose computer, but may be any one of the example electronic devices mentioned above. The second electronic device comprises a processor 310 coupled to a display 302, memory (e.g., RAM and/or ROM) 314, a wireless communication system 312 and an input/output interface 316. The function of the processor 310 is similar to the processor 240 described for electronic device 100. The wireless communication system 312 is similar to the short-range communication subsystem 262 of the electronic device 100 and is a wireless bus protocol compliant communication mechanism such as a Bluetooth® communication module to provide for communication with similarly-enabled systems and devices or IEEE 802.11 radio standards, which is more typically known as WiFi. The input/output interface 316 includes, for example any input device, including one or more of a keyboard and mouse. It will be appreciated that the I/O interface 316 generates outputs signals to drive the display 302 based on control signals received from the processor 310. The memory 314 is similar in functionality and data stored thereon as the memory components (e.g., flash memory 244, RAM 246, and ROM 280) described in association with electronic device 100.

Returning to Fig. 2A, in the second operating state, the first and second electronic devices 100, 300 are coupled to one another wirelessly, for example, via their respective communication modules 262, 312 using WiFi, for example. However, it will be appreciated that the first and second electronic devices 100, 300 may be connected or coupled via a wired connected, for example, via USB or other serial or parallel connection. Interaction with the first electronic device 100 for controlling the second electronic device 300 in the second operating state may be referred to as remote interaction. Therefore, the first electronic device switches from a first operating state to a second operating state to allow it to control a function of the second electronic device 300 in this example. In this example, the first electronic device 100 switches to the second operating state when it is coupled (i.e., a connection is established) with the second electronic device 300. Alternatively, the first electronic device 100 may switch to the second operating, when it enters a mode or an application is executed thereon that allows the first electronic device 100 to be used as an input control device for a further, remote, electron device (e.g., the second electronic device). This is to say that the first electronic device100 may remain in the first operating state when a communication connection is established with the second electronic device 300, and until such a time that an external controlling mode or an application is executed to allow control of remote devices is launched.

The first electronic device 100 includes an executable application which when launched or executed configures the first electronic device 100 to be used as an input device to control functions of the second electronic device 300. In this example, the first electronic device 100 is configured as a track pad device, such that the movement 130 of a user's finger is detected on the input interface 106 of the first electronic 100 and the processor 240 of the first electronic device 100 translates the movement into control signals which are output to the second electronic device 300. The configuration of the first electronic device 100 includes the display of a track pad area and, optimally, one or more soft keys or selectable objects or icons. It will be understood that the track pad area is only used for control of an operation or function of the second electronic device 300 (e.g., moving a cursor and selecting selectable control icons or selectable control objects) and not the first electronic device 100. The control signals may be one or more of absolute coordinates, a vector, a series of vectors representing the movement of the user's finger, a tap, multiple taps on the input interface 106 and a selection operation received via selection of one or more displayed soft keys or selectable display objects or icons. The control signals generated by the processor 240 of the first electronic device 100 are output to the second electronic device via the respective communications modules and the processor 310 of the second electronic device 300 receives the control signals. The control signals are used to control a cursor 308, for example, displayed on the display 302 of the second electronic device 300. The taps or selections may be used to make selections of selectable display object or icons 304 or to select an object or icon displayed on a tool bar 306, as is typical with input control devices. It will be appreciated that the control signals generated by the processor 240 of the first electronic device may be in the same format as control signals that would generated by a more typical input control device, e.g., a mouse or track pad.

While the first electronic device 100 is configured in the second operating state the display of the first electronic device 100 will be typically filled with a display screen illustrative of a track pad for example. This is to say that other display icons (e.g., display icons 108) are not displayed. However, the static or home menu bar 110 may still be displayed. Alternatively or additionally the user may be able to exit the track pad application or configuration by performing a sweep gesture across the input interface 106. It will be appreciated that the sweep gesture may be performed along any extent of the input interface 106, but will typically involve performing a gesture of a predetermined distance along the full extent of a dimension of the input interface 106 (e.g., across the entire width or length of the user input 106).

While a user is controlling the second electronic device 300, via the first electronic device 100, the processor 240 of the first electronic device generates control signals to generate tactile feedback 132 via the tactile feedback generation interface 238. For example when a user input is received at the first electronic device 100 for control of a function of the second electronic device 300, feedback at the first electronic device is provided. In this example, the tactile feedback is provided in the form of a vibration of the first electronic device 100. The tactile feedback is provided when a user input is detected in association only with control of the second electronic device 300. The user input may include one or more of movement of a user's finger on the displayed track pad, a tap or selection gesture and contact with the input interface 106 within the displayed track pad area, but without movement. However, if the user makes contact with the input interface outside of the track pad display area, for example, the home bar 110 or is attempting to perform a sweep gesture to exit the track pad application, the user is not provided with any form of feedback. That is to say that if the user attempts to provide an input which is associated only with the first electronic device (similar to the first operating state or local interaction), and is not associated with control of the second electronic device 300, no feedback is provided to user. A user received sweep gesture to exit the track pad application will cause the processor 240 of the first electronic device to exit the track application. Also, a user input received via interaction with the home menu 110 may also cause the processor 240 of the first electronic device to exit the track application. If the first electronic device receives an input that is not associated with control of the second electronic device 300, the first electronic device may return to the first operating states. Returning to the first operating states may include one or more of exiting the track pad or control application, terminating the commination connection, and reducing the display of the track pad, while the track pad application remains active in the background (e.g., not visible to a user) and no control signals are sent to the second electronic device 300.

Therefore, the user is able to determine when input is associated with the first or second electronic device without looking at the first electronic device, and thus can concentrate on the display 302 of the second electronic device 300.

Furthermore, the first electronic device 100 is provided with two input buttons 112, 114 which in this example are associated only with the first electronic device, such that if either of these buttons 112, 114 were pressed by a user while the first electronic device is in the first or second operating state, no tactile feedback would be provided. Furthermore, user input received via the push buttons 112, 114, may cause the first electronic device to exit the second operating state and return to the first operating state, when control of the first electronic device 100 is associated with these push buttons 112, 114.

It will be appreciated that input control associated only with the first electronic device 100 can be considered as control associated with a local interaction and input control associated only with the second electronic device 300 can be considered as control associated with a remote interaction.

In a further example, tactile feedback is generated at the first electronic device 100 when input control is received which is associated only with a local interaction, where the generated feedback is different than for input control associated with a remote interaction. For example, a different type of vibration may be used (e.g., pulsed vibration for a local interaction and constant vibration for a remote interaction). Alternatively, a different type of tactile feedback could be provided for a local interaction (e.g., vibration) than for a remote interaction (e.g., haptic). It will be appreciated that tactile feedback may be provided in association with control of the first electronic 100 in either the first or second operating states. However, feedback provided in the second operating state is associated only with input control of the second electronic device 300 will be different to the feedback provided in association with control of the first electronic 100. Furthermore, so that the feedback is perceived by the user as different, one or other of the feedbacks, may be to generate no feedback in association with control of the first or second electronic devices, such that the user can easily distinguish between feedback associated with input control of the first electronic device 100 and feedback associated with input control of the second electronic device 300.

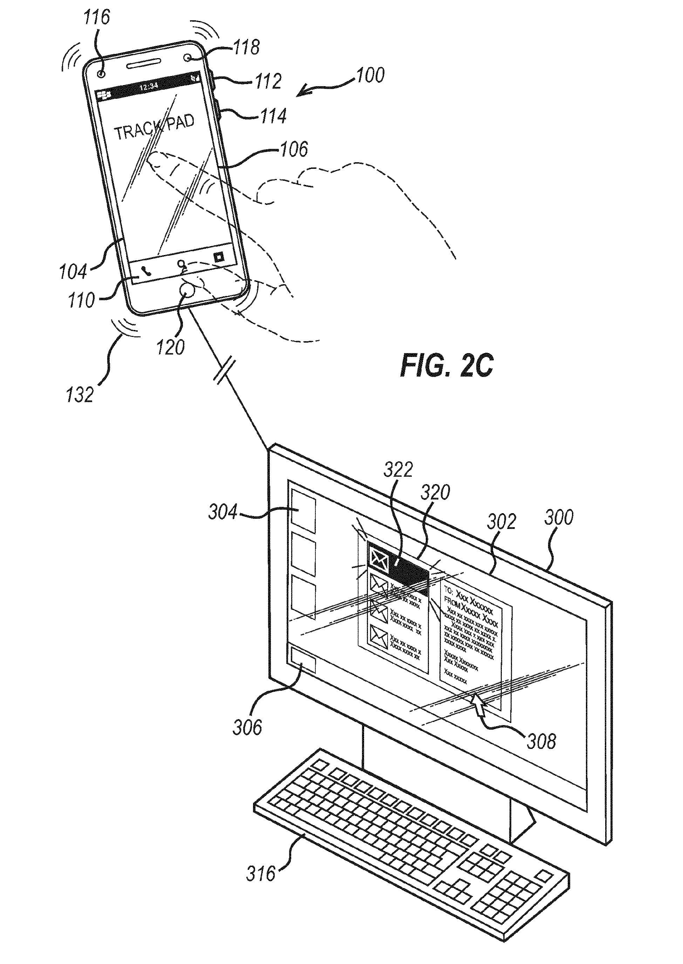

Referring to Fig. 2C, a further, optional, operation of the first electronic device 100, while in the second operating state, is illustrated. The first and second electronics devices 100, 300 illustrated in Fig. 2C are the same those illustrated in Figs. 2B. In this example operation, the second electronic device 300 is configured to generate output signals or data for transmission to the first electronic device 100. For example, the second electronic device 300 has an application stored therein (e.g., memory 314) which when executed on the processor 310 causes the processor 310 of the second electronic device 300 to generate and transmit control signals for generating feedback at the first electronic device 100, where the operation is associated only with the second electronic device 300. The processor 310 of the second electronic device 300 is configured to generate control data when an operation is performed at the second electronic device 300 and the first and second electronic devices 100, 300 are coupled to one another.

The operation performed at the second electronic device 300 may be if the cursor 308 at the second electronic device 300 is being controlled via control signals from the first electronic device 100 to interact with or operate one of a plurality of executable applications on the further electronic device. For example, if the user is controlling a predetermined application, e.g., a message or email application 320, on the second electronic device via the first electronic device 100, the processor 310 of the second electronic device 300 generates and sends control data to the processor 240 of the first electronic device to generate feedback to signify to the user that the predetermined application is being interacted with. The processor 240, in response to the received data, generates feedback at the first electronic device 100, as discussed above.

Furthermore, the processor 310 of the second electronic device 300 may generate and send control data to the processor 240 of the first electronic device 100 in response to an event occurring at the second electronic device 300. In the example of the message application 320, the event could be the receipt of a new message 322, for example. The processor 240 of the first electronic device 100, upon receipt of the control data will generate feedback 132 at the first electronic device 100. It will be appreciated that the feedback generated at the first electronic device 100 generated in response to an input control and an event or interaction at the second electronic device 300 may be different. A different type of tactile feedback for each of the user input and event or interaction could be used, or the type of feedback could be the same but the form of the feedback could be different. For example, in response to user input received at the first electronic device 100 for control of the second electronic device 300, the first electronic device 100 provides a constant vibration to the user, but when an event occurs at the second electronic device 300, and in response to control data received from the second electronic device 300, the first electronic device 100 generates a pulsed vibration for a predetermined time. The event may occur at a currently executed application, which may be minimised at a tool bar, for example, or the user may be currently interacting with the application on a second electronic device 300 via the input received from the first electronic device 100. The event may include one or more of one or more of receipt of a user-readable message received by an application or a user notification generated by an application.

The user input has been described as being provided via touchscreen, but the user input may also be provided by one or more of moving the electronic device, which may be detected by a motion or orientation detector 249, for example, a gyroscope and/or accelerometer, an electromagnetic radiation receiving device, such as the camera 118 and an audio receiving device, such the microphone 120.

Figs. 3A and 3B illustrate an embodiment that involves only a single electronic device 100. The electronic device illustrated in Figures 3A and 3B are similar to those illustrated in Figs. 1A and 1B. The electronic device 100 is configured to be operated in two distinct functional partitions which are similar to having two separate devices.

In the first functional partition illustrated in Fig. 3A, the electronic device 100 is configured to operate as a "home" or personal device. When the electronic device 100 is configured to operate as a home device, the user is permitted to access at least one predetermined component or function of the electronic device 100 which is associated with the home configured device. The components or functions of the mobile electronic device include one or more of an executable component, an application, a block of memory, user-received items, received data, and user entered data. For example, in the home configured device, the user is only permitted to access a personal email account. This may be achieved by a specific email application for personal email or the same email application as is used for a different functional partition which is configured to access different email servers based on the functional partition of the electronic device.

In the second functional partition illustrated in Fig. 3B, the electronic device 100 is configured to operate as a "work" or professional device. When the electronic device 100 is configured to operate as a work device, the user is permitted to access at least one predetermined component or function of the electronic device 100 which is associated with the work configured device. The components or functions of the mobile electronic device include one or more of an executable component, an application, a block of memory, user-received items, received data, and user entered data. For example, in the work configured device, the user is only permitted to access a work email account. This may be achieved by a specific email application for work email or the same email application as is used for the home partition which is configured to access different email servers based on the functional partition of the electronic device 100. The electronic device 100 may switch between the first and second operating states in response to a user input or in response to an event occurring in the other of the operating states. For example, if the electronic device 100 is operating in the first operating state (i.e., the home partition) and an event (e.g., a message or notification is received) occurs in association with the second operating state (i.e., the work partition) the electronic device 100 may switch from the first operating state to the second operating state in response to the event.

In the first functional partition, or first operating state, the electronic device 100 does not generate feedback in response to user input received at the first electronic device 100 for controlling the first functional partition. This is illustrated in Fig. 3A with the absence of any vibration or textured surface 140. In the second functional partition, or second operating state, the electronic device 100 does generate feedback 142 in response to user input received at the first electronic device 100 for controlling the first functional partition. The tactile feedback generated in the second operating state is tactile feedback (e.g., electrovibration feedback) as illustrated by the textured surface 142 of the user input 106. It will be appreciated that the absence of any physical feedback in the first operating state for the first functional partition could be considered as providing feedback, since the user will detect a difference between the typically smooth surface of the user input 106 (e.g., the display surface) in the first operating state and the textured surface provided in the second operating state for the second functional partition. Thus the user is able to easily determine if the device is configured in the first or second functional partitions.

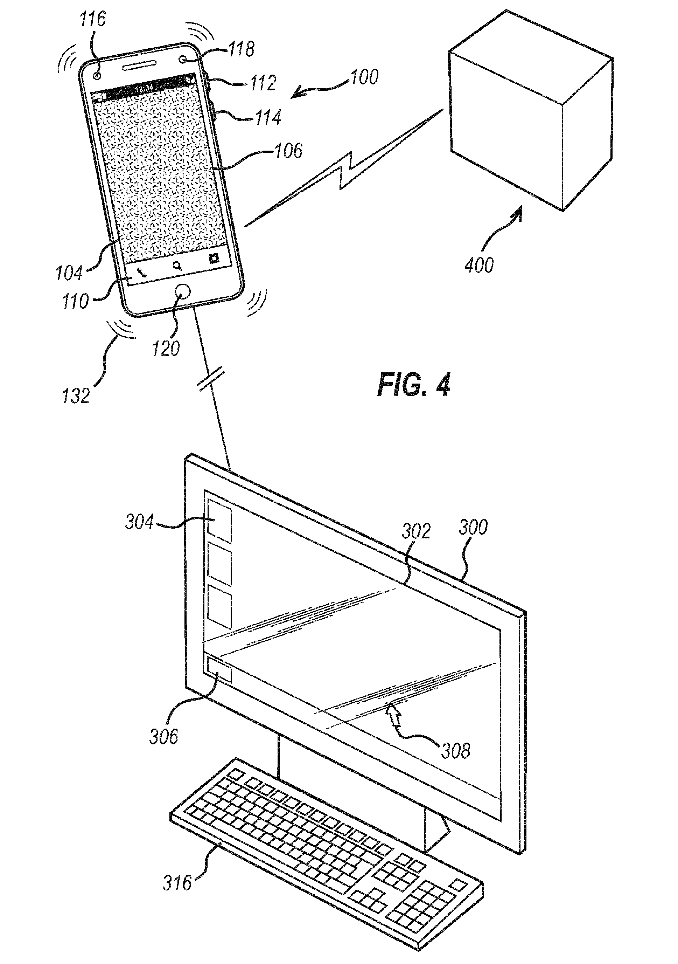

Fig. 4 illustrates an embodiment with an electronic device 100 that is coupled with multiple remote devices. The electronic device 100 is coupled to two further or remote devices in this example, but could be coupled to more devices, i.e., two or more electronic devices. The first electronic device 100 is coupled to a second or remote electronic 300 as is described in association with Figs. 2A and 2C. That is to say that the first electronic device 100 is coupled to a second electronic device 300, for example, via their respective communication modules 262, 312 using WiFi, for example, but may also be coupled via a wired connected, for example, via a wired serial or parallel connection (e.g., via USB). However, in this example the user input 106 of the first electronic device 100 is provided with haptic feedback in the form of electrovibration to provide the sensation to a user of a textured surface when the first electronic device 100 is configured to receive user input to control a function of the second electronic device 300.

The first electronic device 100 is also coupled in this example via a wireless connection to a further remote or third electronic device 400 (e.g., connected via Bluetooth or WiFi). In this example, the third electronic device 400 is a wireless speaker that receives audio data from a server, which may be one or more of the first and second electronic devices 100, 300. The third electronic device 400 may be any form of electronic device that is configured to receive a control signal from a remote electronic device. The first electronic device 100 is configured to generate and transmit control signals for controlling a function of the third electronic device 400. In this example the function is the volume control of the wireless speaker 400. The control signals may be generated by an executable application stored in memory 244 and executable on the processor 240 of the first electronic device 100. User input received via the input buttons 112, 114 is used to generate the control signals for controlling a function of the third electronic device 400. In this example, the input buttons 112, 114 are used to control the sound volume of the third electronic device or wireless speaker 400. It will be appreciated that the control signals received by the third electronic device 400 may be used to control hardware (e.g., motorised volume control) or software components (e.g., an executable application) of the third electronic device 400. The processor 240 of the first electronic device 100 generates control signals for the tactile feedback generation interface to generate tactile feedback at the first electronic device 100. In this example, a vibrational feedback is provided in response to user input received via the push buttons 112, 114 to control the function of the third electronic device. The method of operation described in association with Figure 4 is a further example of the first electronic device 100 operating in the second operating state, where the first operating state of the first electronic device 100 is similar to that described in association with Figure 2A. Thus, the skilled is provided with different tactile feedback depending on the device that is being controlled via the first electronic device 100.

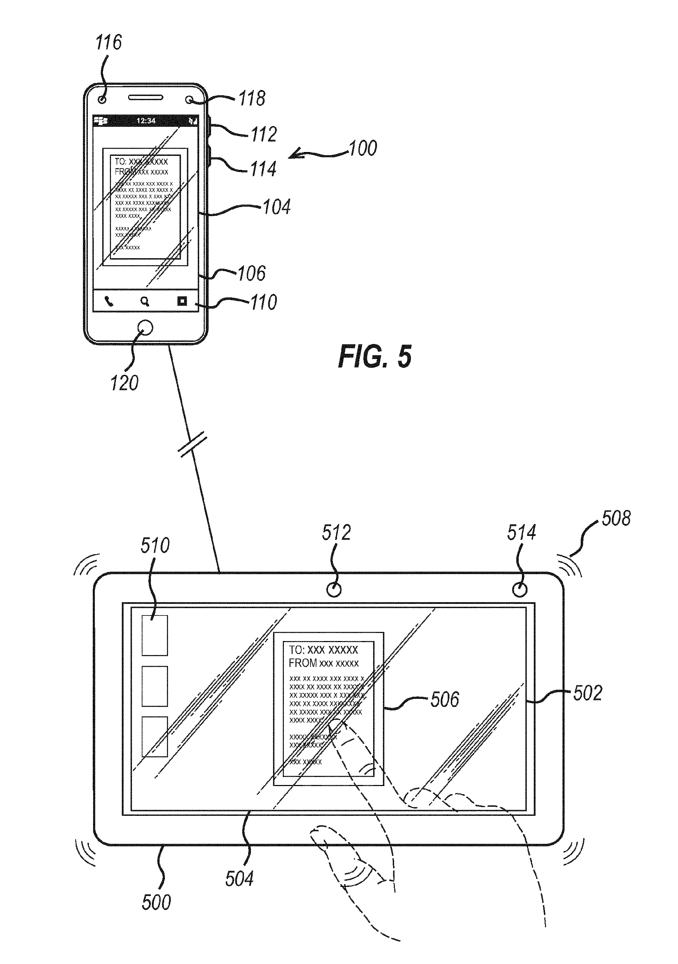

Fig. 5 illustrates a further embodiment that provides a first or local electronic device 500 that is coupled to a further electronic device 100. The further or second electronic device 100 is similar to the device described in association with Fig. 1A. The local electronic device 500 comprises the same components as illustrated in 2B (i.e., a processor, memory, input/output, and a wireless communication interface). The local electronic device 500 also includes a display 502 which incorporates a user input interface 504 and a tactile feedback generation unit (not shown) as described in association with Figs. 1A and 1B. The input/output devices (i.e., I/O) of the local electronic device 500 may include a camera 512 and speaker 514. As described for Figs. 1A and 1B, the tactile feedback may be provided via electrodes which maybe overlaid on the display 502, as part of a capacitive or resistive touch panel, forming the input interface 504 used to generate electrovibration to the touch surface or input interface 504. The feedback generation unit may alternatively or additionally comprise a vibration element to vibrate the electronic device 500 so a user is able to detect the vibration, typically when holding the electronic device 500, as is known in the art. The local electronic device is also provided with one or more selectable display icons or objects 510 which when selected launch or execute applications stored in memory therein.

In the example illustrated in Fig. 5, the two electronics devices 100, 500 are coupled via their respective wireless communications system, e.g., connected via Bluetooth or WiFi. The local electronic device 500 is configured to receive display data from the remote electronic device 100, which in this example provides a copy or mirror 506 of the display 106 of the remote electronic device 100. This may be achieved using an executable application on both the electronic devices 100, 500 which allows this interaction. For example, the application on the remote electronic device 100 generates display data which is transmitted to the local electronic device 500. The local electronic device then provides a display to the user based on the received display data. It will be appreciated that the application may be stored in the memory of each electronic device 100, 500 and will be executed by their respective processors, for example, in response to a selectable display icon or object 510 of the local electronic device 500. The executable application also allows the user to interact with the displayed data 506. For example, the user may be move the displayed item 506, or further make a selection. The displayed item 506 represents a message (e.g., email message) that is being display on the remote device 100. The user may make a selection to respond to the message using the input interface 504, which is transmitted to the remote electronic device 100 to update the display to a response window. The local electronic device 500 upon receipt of the user input to interact with the displayed item 506 associated with the remote electronic device 100 generates feedback at the local electronic device 500 in the form of a vibrational feedback 508. Therefore, the user is aware that the input provided relates to control of a function associated with the remote electronic device 100 (i.e., a further electronic device). When the two devices 100, 500 are connected and interact as described above, this may be described as a second operating state. When in a first operating state the user input is associated only with the local electronic device 500, as described in association with Figures 1A to 2C.

In the embodiment described in association with Figure 5, the user input is provided via a touch screen interface at the surface of the local electronic device 500. In an alternative embodiment, the remote electronic device 100 may also provide the local electronic device 500 with control signals pertaining to user input received at the remote electronic device 100, as described in association with Fig. 2A. In this alternative embodiment, the remote electronic device 100 is configured to output display data to the local electronic device 500. The display data pertains to one or more applications executable on the remote electronic device 100. The display data may be rendered at the local electronic device 500 to generate one or more display objects that are combined or blended with display objects already displayed on the local electronic device 500. Alternatively, the display data may be rendered by the local electronic device 500 to produce one or more display objects that are not combined with display objects generated at the local electronic device 500. As described in association with Fig. 2A, the display of the remote electronic device will include a form of track pad display object. User input provided at the remote electronic device 100, to control a function at the local electronic device 500, would cause the processor of the remote electronic device 100 to generate control signals to generate tactile feedback at the remote electronic device, as described above. It will be appreciated that if the local electronic device 500 is only being used to display the received display data, the control signals generated in response to user input at the remote electronic device 100 may not be transferred to the local electronic device 500, rather the control signals are used to control the one or more applications executable on the remote electronic device 100.

In an alternative embodiment the feedback provided to a user at the electronic device may be constant when in the second operating state, rather than only when user input is received.

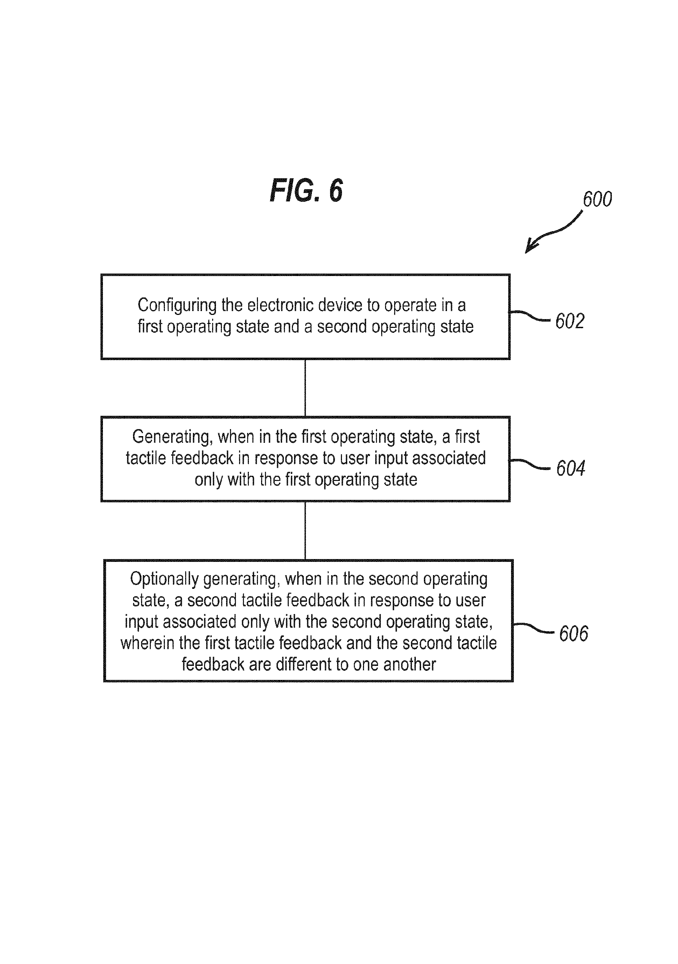

Fig. 6 is a flow chart depicting a method 600 performed by the processor 240 of an electronic device 100, as described in association with Figs. 1A to 5. The steps may be performed in a different order than illustrated.

At block 602, configuring the electronic device 100 to operate in a first operating state and a second operating state.

At block 604, generating, when in the first operating state, a first tactile feedback in response to user input associated only with the first operating state.

At block 606, optionally generating, when in the second operating state, a second tactile feedback in response to user input associated only with the second operating state, wherein the first tactile feedback and the second tactile feedback are different to one another.

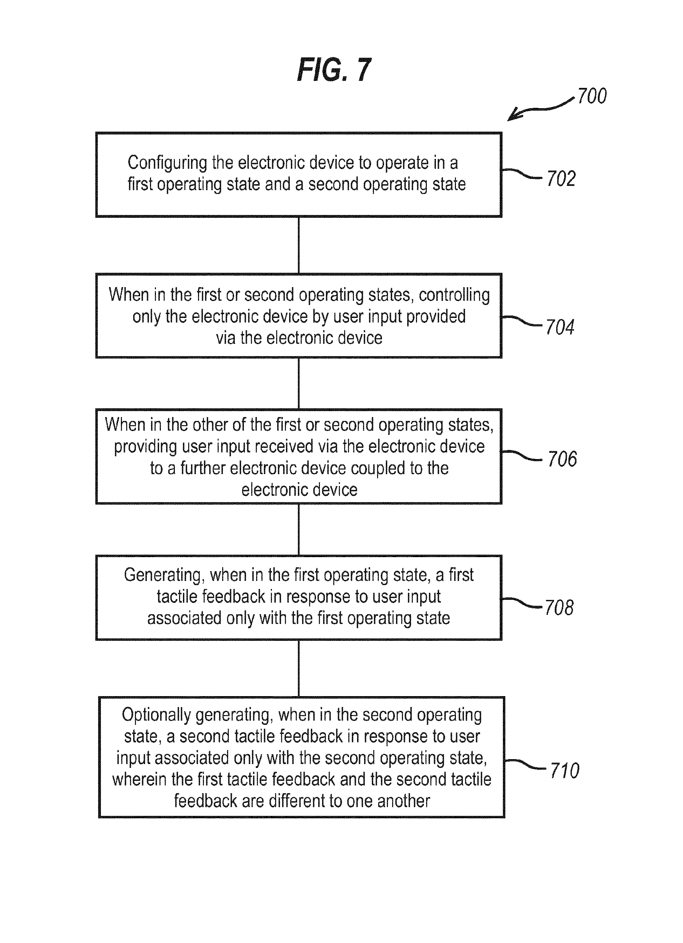

Fig. 7 is a flow chart depicting a method 700 performed by the processor 240 of an electronic device 100, as described in association with Figs. 1A to 2C. The steps may be performed in a different order than illustrated.

At block 702, configuring the electronic device 100 to operate in a first operating state and a second operating state.

At block 704, when in the first or second operating states, controlling only the electronic device by user input provided via the electronic device.

At block 706, when in the other of the first or second operating states, providing user input received via the electronic device to a further electronic device coupled to the electronic device.

At block 708, generating, when in the first operating state, a first tactile feedback in response to user input associated only with the first operating state.

At block 710, optionally generating, when in the second operating state, a second tactile feedback in response to user input associated only with the second operating state, wherein the first tactile feedback and the second tactile feedback are different to one another.

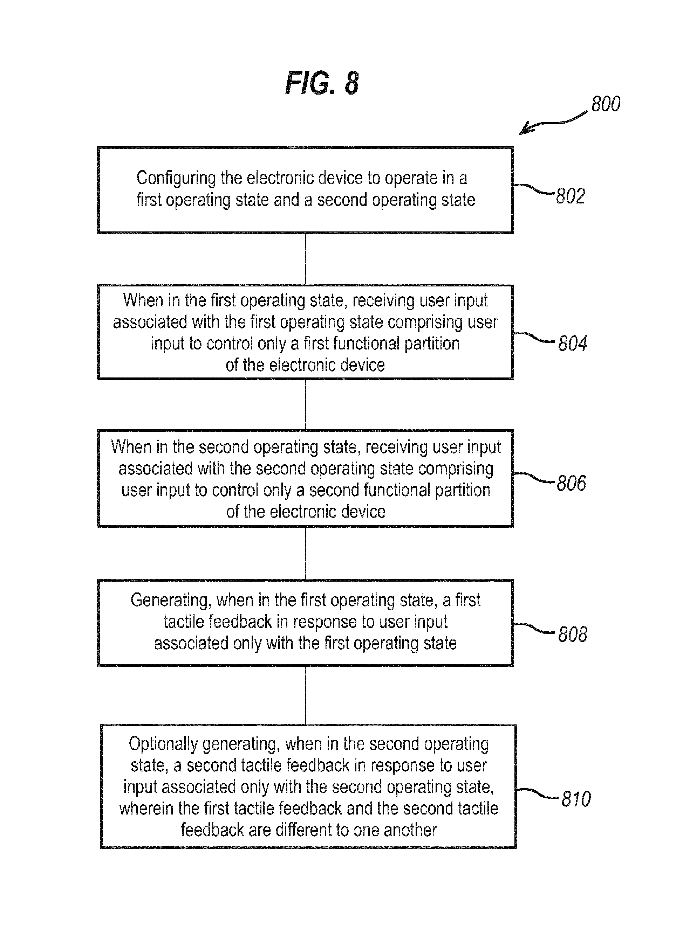

Fig. 8 is a flow chart depicting a method 800 performed by the processor 240 of an electronic device 100, as described in association with Figs. 3A and 3B. The steps may be performed in a different order than illustrated.

At block 802, configuring the electronic device 100 to operate in a first operating state and a second operating state.

At block 804, when in the first operating state, receiving user input associated with the first operating state comprising user input to control only a first functional partition of the electronic device.

At block 806, when in second operating state, receiving user input associated with the second operating state comprising user input to control only a second functional partition of the electronic device.

At block 808, generating, when in the first operating state, a first tactile feedback in response to user input associated only with the first operating state.

At block 810, optionally generating, when in the second operating state, a second tactile feedback in response to user input associated only with the second operating state, wherein the first tactile feedback and the second tactile feedback are different to one another.

While the present application is primarily described in terms of devices and methods (e.g., electronic devices 100, 300, and 500), the devices may include components for performing at least some of the example aspects and features of the described methods, be it by way of hardware components (such as memory and/or a processor), software or any combination of the two, or in any other manner. Moreover, an article of manufacture for use with the apparatus, such as a pre-recorded storage device or other similar computer readable medium including program instructions recorded thereon may direct the apparatus to facilitate the practice of the described methods. It should be understood that such apparatus and articles of manufacture come within the scope of the present application.

The embodiments described in accordance with the present disclosure may be provided as a computer software product. The computer software product may be provided in, on or supported by a computer readable medium which could be provided as all possible permanent and non-permanent forms of computer readable medium either transitory in nature, such as in a data transmission signal for example sent over the internet, or non-transitory in nature such as in the RAM 246 of the device 100 or other, non-volatile storage such as memory. On the other hand the computer readable medium may be a non-transitory computer readable medium comprising all computer-readable media, with the sole exception being a transitory, propagating signal

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

The following is a non-exhaustive list of embodiments:

Embodiment 1. A method for use in an electronic device, the electronic device being configured to function in a first operating state and a second operating state, the method comprising: generating, when in the first operating state, a first tactile feedback in response to user input associated only with the first operating state.

Embodiment 2. The method of Embodiment 1, wherein user input associated with the first operating state comprises user input to control only a first functional partition of the electronic device and wherein user input associated with the second operating state comprises user input to control only a second functional partition of the electronic device.

Embodiment 3. The method of Embodiment 2, wherein the functional partitions are configured to allow access to at least one predetermined component of the electronic device.

Embodiment 4. The method of Embodiment 3, wherein the at least one predetermined component of the electronic device comprises one or more of an executable component, an application, a block of memory, user-received items, received data, and user entered data.

Embodiment 5. The method of Embodiment 1, wherein: when in the first operating state, only the electronic device is configured to be controlled by user input provided via the electronic device; and when in the second operating state, the electronic device is configured to be coupled to a further electronic device and to provide user input received via the electronic device to the further electronic device for controlling an operation associated with the further electronic device.

Embodiment 6. The method of Embodiment 5, wherein the first tactile feedback is generated in response to controlling an operation associated only with the electronic device.

Embodiment 7. The method of Embodiment 1, wherein: when in the first operating state, the electronic device is configured to be coupled to a further electronic device and to provide user input received via the electronic device to the further electronic device for controlling an operation associated with the further electronic device; and when in the second operating state, only the electronic device is configured to be controlled by user input provided via the electronic device.

Embodiment 8. The method of Embodiment 7, wherein the first tactile feedback is generated in response to providing user input to the further electronic device for controlling an operation which is associated with the further electronic device.

Embodiment 9. The method of Embodiment 7 or Embodiment 8, wherein the first tactile feedback is generated in response to receiving data from the further electronic device based on an operation which is associated with the further electronic device.

Embodiment 10. The method of any one of Embodiments 7 to 9, wherein, when in the second operating state, the electronic device is configured to output display data to the further electronic device pertaining to one of a plurality of executable applications executable on the electronic device for display on the further electronic device and wherein the operation associated with the further electronic device comprises interaction with a display object generated at least in part on the received displayed data.

Embodiment 11. The method of any one of Embodiments 7 to 10, wherein the operation which is associated with the further electronic device comprises interaction with a given one of a plurality of executable applications on the further electronic device.

Embodiment 12. The method of Embodiment 11, when dependent on Embodiment 9, wherein the data received from the further electronic device pertains to an event occurring in association with the given application.

Embodiment 13. The method of Embodiment 12, wherein the event comprises one or more of receipt of a user-readable message received by the given application or a user notification generated by the given application.

Embodiment 14. The method of Embodiment 5 or Embodiment 6, when in the second operating state, the method comprising: receiving user input at the electronic device for controlling the operation which is associated with the further electronic device; and outputting control data from the electronic device for controlling the operation which is associated with the further electronic device.

Embodiment 15. The method of any of Embodiments 7 to 12, when in the first operating state, the method comprising: receiving user input at the electronic device for controlling the operation which is associated with the further electronic device; and outputting control data from the electronic device for controlling the operation which is associated with the further electronic device.

Embodiment 16. The method of any one of Embodiments 5 to 14, wherein the operation which is associated with the further electronic device comprises controlling hardware of the further electronic device.

Embodiment 17. The method of any one of the preceding Embodiments, wherein the first tactile feedback comprises one or more of: vibration of the electronic device or haptics on a screen of the electronic device.

Embodiment 18. The method of any one of the preceding Embodiments, wherein user input at the electronic device is received from one or more of: a button on the electronic device, a touch sensitive interface on the electronic device, a motion detector within the electronic device, such as a gyroscope and/or an accelerometer, an electromagnetic radiation receiving device, such as a camera and an audio receiving device, such a microphone.

Embodiment 19. The method of any one of the preceding Embodiments, comprising: generating, when in the second operating state, a second tactile feedback in response to user input associated with the second operating state, wherein the first tactile feedback and the second tactile feedback are different to one another.

Embodiment 20. The method of any one of the preceding Embodiments, wherein the second tactile feedback comprises one or more of: vibration of the electronic device or haptics on a screen of the electronic device.

Embodiment 21. An electronic device, comprising processing circuitry configured to: operate in a first operating state and operate in a second operating state, wherein the processing circuitry is configured to switch between the first and second operating states; the processing circuitry being further configured to: generate, when operating in the first operating state, a first tactile feedback in response to the operation which is associated only with the first operating state.

Embodiment 22. A computer-readable medium comprising executable instructions which, when executed, cause a processor to perform a method at an electronic device, the electronic device being configured to function in a first operating state and a second operating state, the method comprising: generating, when in the first operating state, a first tactile feedback in response to user input associated only with the first operating state.

Embodiment 23. An electronic device, comprising processing circuitry configured operate in a first operating state and operate in a second operating state, wherein the processing circuitry is configured to switch between the first and second operating states; the processing circuitry being further configured to perform a method according to any one of Embodiments 1 to 20.

Embodiment 24. A computer-readable medium comprising executable instructions which, when executed, cause a processor to perform a method according to any one of Embodiments 1 to 20 at an electronic device, the electronic device being configured to function in a first operating state and a second operating state.

It will be appreciated that the foregoing discussion relates to particular embodiments. However, in other embodiments, various aspects and examples may be combined.

## Claims

1. A method for use in an electronic device, the electronic device being configured to function in a first operating state and a second operating state, the method comprising:
generating, when in the first operating state, a first tactile feedback in response to user input associated only with the first operating state.

2. The method of claim 1, wherein user input associated with the first operating state comprises user input to control only a first functional partition of the electronic device and wherein user input associated with the second operating state comprises user input to control only a second functional partition of the electronic device.

3. The method of claim 2, wherein the functional partitions are configured to allow access to at least one predetermined component of the electronic device, wherein the at least one predetermined component of the electronic device optionally comprises one or more of an executable component, an application, a block of memory, user-received items, received data, and user entered data.

4. The method of claim 1, wherein:
when in the first operating state, only the electronic device is configured to be controlled by user input provided via the electronic device; and
when in the second operating state, the electronic device is configured to be coupled to a further electronic device and to provide user input received via the electronic device to the further electronic device for controlling an operation associated with the further electronic device, wherein the first tactile feedback is optionally generated in response to controlling an operation associated only with the electronic device.

5. The method of claim 1, wherein:
when in the first operating state, the electronic device is configured to be coupled to a further electronic device and to provide user input received via the electronic device to the further electronic device for controlling an operation associated with the further electronic device; and
when in the second operating state, only the electronic device is configured to be controlled by user input provided via the electronic device, wherein the first tactile feedback is optionally generated in response to providing user input to the further electronic device for controlling an operation which is associated with the further electronic device.

6. The method of claim 5, wherein the first tactile feedback is generated in response to receiving data from the further electronic device based on an operation which is associated with the further electronic device.

7. The method of claim 5 or claim 6, wherein, when in the second operating state, the electronic device is configured to output display data to the further electronic device pertaining to one of a plurality of executable applications executable on the electronic device for display on the further electronic device and wherein the operation associated with the further electronic device comprises interaction with a display object generated at least in part on the received displayed data.

8. The method of any one of claims 5 to 7, wherein the operation which is associated with the further electronic device comprises interaction with a given one of a plurality of executable applications on the further electronic device.

9. The method of claim 8, when dependent on claim 6, wherein the data received from the further electronic device pertains to an event occurring in association with the given application, wherein the event optionally comprises one or more of receipt of a user-readable message received by the given application or a user notification generated by the given application.

10. The method of claim 4, when in the second operating state, the method comprising:
receiving user input at the electronic device for controlling the operation which is associated with the further electronic device; and
outputting control data from the electronic device for controlling the operation which is associated with the further electronic device.

11. The method of any one of claims 5 to 9, when in the first operating state, the method comprising:
receiving user input at the electronic device for controlling the operation which is associated with the further electronic device; and
outputting control data from the electronic device for controlling the operation which is associated with the further electronic device.

12. The method of any one of claims 4 to 10, wherein the operation which is associated with the further electronic device comprises controlling hardware of the further electronic device.

13. The method of any one of the preceding claims, comprising:
generating, when in the second operating state, a second tactile feedback in response to user input associated with the second operating state, wherein the first tactile feedback and the second tactile feedback are different to one another.

14. An electronic device, comprising processing circuitry
configured operate in a first operating state and operate in a second operating state, wherein the processing circuitry is configured to switch between the first and second operating states; the processing circuitry being further configured to perform a method according to any one of claims 1 to 13.

15. A computer-readable medium comprising executable instructions which, when executed, cause a processor to perform a method according to any one of claims 1 to 13 at an electronic device, the electronic device being configured to function in a first operating state and a second operating state.
